Europäisches Patentamt

European Patent Office

Office européen des brevets

(19)

(11) **EP 0 842 981 A2**

(12) **EUROPEAN PATENT APPLICATION**

(43) Date of publication:
20.05.1998 Bulletin 1998/21

(51) Int. Cl.$^6$: **C08L 51/04**, C08L 25/04

(21) Application number: 97119439.4

(22) Date of filing: 06.11.1997

(84) Designated Contracting States:
**AT BE CH DE DK ES FI FR GB GR IE IT LI LU MC NL PT SE**
Designated Extension States:
**AL LT LV MK RO SI**

(30) Priority: **18.11.1996 JP 306499/96**
**11.06.1997 JP 153434/97**

(71) Applicant:
**DAICEL CHEMICAL INDUSTRIES, LTD.**
**Sakai-shi, Osaka 590 (JP)**

(72) Inventors:
• **Okumura, Arimichi**
**Ibo-gun, Hyogo 671-15 (JP)**
• **Oomae, Hitomi**
**Kanzaki-gun, Hyogo 679-22 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Impact-resistant styrenic resin compositions and moulded articles thereof**

(57) An impact-resistant styrenic resin composition is provided with improved impact resistance and external appearance properties without sacrificing its mouldability, and the use of the resin composition effectively prevents the formation of weld lines. The resin composition comprises a rubber-containing styrenic resin in which a rubber polymer is dispersed in a styrenic polymer in particulate form, and has a modulus of storage elasticity G' of 500 to 10,000 dyne/cm$^2$ measured at 220°C at a frequency of 0.01 Hz in terms of its viscoelasticity. The resin composition may comprise a rubber-containing styrenic resin, and a rubber elastomer which is substantially free from a butadiene component. Its Vicat softening temperature is 80 to 110°C. Moulding of this resin composition, at a metal mould temperature of 60°C, provides a moulded article with a weld line of 15 μm or less.

EP 0 842 981 A2

Printed by Xerox (UK) Business Services
2.16.3/3.4

## Description

FIELD OF THE INVENTION

The present invention relates to an impact-resistant styrenic resin composition which is excellent in external appearance properties and impact resistance properties and a production method thereof, and to a moulded article and a moulding method thereof using the resin composition.

BACKGROUND OF THE INVENTION

Among impact-resistant styrenic resins, a rubber-containing styrenic resin (rubber-modified styrenic resin) is produced by polymerization of an aromatic vinyl monomer in the presence of a rubber polymer or elastomer. Such a rubber-containing styrenic resin possesses remarkable moulding processability, in addition to relatively balanced physical properties inclusive of impact resistance, rigidity and surface glossiness. For these advantages, the rubber-containing styrenic resin is widely utilised in the fields of electrical equipments, office or business machines, packaging containers, sundries, etc.

In comparison with an acrylonitrile-butadiene-styrene copolymer (ABS resin), however, the rubber-containing styrenic resin has lower impact resistance and shows poorer surface glossiness when moulded into an article. Further, the moulded article tends to be marked with weld lines formed during the moulding process (particularly, injection moulding with the use of plural gates). With a growing trend towards thinner-walled products and a growing demand for cutting production costs, in electrical equipment and office machine industries, there have been strong requests to the rubber-containing styrenic resin for impact resistance and external appearances comparable to those of the ABS resin.

Generally, in the rubber-modified styrenic resin produced by the above polymerization method, its impact resistance and surface glossiness can be controlled by adjusting the amount or the particle size of the rubber polymer. By way of example, the impact resistance of the rubber-modified styrenic resin can be improved either by increasing the amount of the rubber polymer or by employing a larger-sized particle as the dispersed rubber polymer. Instead, the thus improved moulded article has to sacrifice the glossiness on its surface and to suffer from marked weld lines. On the other hand, the surface glossiness of the moulded article can be improved by reducing the amount of the rubber polymer or by employing a smaller-sized particle as the dispersed rubber polymer particle. But then, the moulded article has to suffer from a critical loss of the impact resistance and, still, from formation of weld lines, As described above, it is difficult to hold the balance of the impact resistance and the surface glossiness of the rubber-modified styrenic resin at high levels, and, further, to inhibit the formation of weld lines.

Japanese Patent Publication No. 25897/1993 (JP-B-5-25897) suggests a polystyrene resin composition with an improved impact resistance and glossiness. This disclosure is characterised by constituting a rubber polymer dispersed in particulate form in a polystyrene with a single occlusion structure-rubber particle with an average particle size of 0.1 to 0.6 μm, and a rubber particle with an average particle size of 0.7 to 2.0 μm. Still though, neither the improvement of the impact resistance and the surface glossiness of the moulded article nor the effect of preventing the formation of weld lines is satisfactory.

Japanese Patent Application Laid-open No. 151500/1996 (JP-A-8-151500) discloses a rubber-modified styrenic resin composition comprising a rubber-modified styrenic resin having a single occlusion structure as well as containing 10 to 35% by weight of a rubber component particle with an average particle size of 0.1 to 0.5 μm, and a nonaromatic polymer with a solubility parameter of 8.45 to 8.70. In the case of this resin composition, too, the impact strength and the surface glossiness are not so improved as expected, and the moulded article is still marred with weld lines.

The prevailing methods for preventing the formation of a weld line on the rubber-modified styrenic resin are (1) the method comprising coating the surface of a moulded article to hide a weld line, (2) the method comprising moulding at a higher metal mould temperature, (3) the method comprising incorporating a plasticiser such as mineral oil to lower the softening point of the resin, etc. In the case of the method (1) (coating and hiding), the increase of the production steps results in a raise in the production cost, and the solvent used for the coating has bad effects in the environment. The coating method is not a fundamental solution for the weld line problem, as the weld line remains to be a weak area or portion in the moulded article. The method (2) (a higher temperature moulding) does improve weld appearances. However, with the extension of its moulding cycle, this method results in the deterioration of production efficiency only to raise the production cost. And, when the formation of weld lines is hindered by lowering the softening point of a resin according to the process (3), the heat-resistance of the resin drops to the level at which the resin is no longer applicable in practice.

As described above, it is very difficult to efficiently prevent the formation of weld lines on the moulded article of the rubber-modified styrenic resin, while avoiding the adverse influences such as decrease of moulding efficiency and rise of the production cost. In particular, it is difficult to avoid weld line formation on the moulded article with maintaining its high impact resistance and excellent surface glossiness.

SUMMARY OF THE INVENTION

It is, therefore, an object of the present invention to provide an impact-resistant styrenic resin composition which strikingly prevents the formation of weld lines without sacrificing its mouldability, and a moulding method using this resin composition.

Another object of the present invention is to provide a styrenic resin composition in which high impact resistance, and excellent external appearance or appearance property (high surface glossiness) are compatible with each other, and a method of producing the same.

A further object of the present invention is to provide an impact-resistant styrenic resin composition which prevents the formation of weld lines without any alternation in the moulding conditions and deterioration in the properties of the resin, such influences causing poorer moulding efficiency and cost rises, and a moulding method using the resin composition.

It is still another object of the present invention to provide a moulded article which possesses both of impact-resistance properties and surface glossiness of the moulded article at high levels, wherein the formation of weld lines is apparently suppressed.

After making intensive researches to achieve the above objects, the inventors of the present invention found that the formation of weld lines can be effectively prevented by controlling the modulus of storage elasticity G' of the rubber-modified styrenic resin within a specific range. The present invention is based on the above findings.

The impact-resistant styrenic resin composition of the present invention comprises a rubber-containing styrenic resin in which a rubber polymer is dispersed in particulate form in a styrenic polymer, and whose modulus of storage elasticity G' is 500 to 10,000 dyne/cm$^2$ in terms of its viscoelasticity measured at 220°C at a frequency of 0.01 Hz. The resin composition comprises a rubber-containing styrenic resin, and a rubber-like elastic substance (rubber elastomer or rubber component) which is substantially free from a butadiene component. The styrenic resin composition has a Vicat softening temperature of about 80 to 110°C. The styrenic resin composition, when moulded at a metal mould temperature of 60°C, provides a moulded article which has a weld line of not wider than 15 μm.

The present invention also includes a method for moulding the above impact-resistant styrenic resin composition to provide a moulded article with a weld line of not wider than 15 μm, when the moulding is conducted at a metal mould temperature of 60°C.

In this specification, it should be understood that the phrase "substantially free from a butadiene component" means that measurement of $^1$H-NMR of the elastomer or rubber polymer detects a butadiene component in a proportion of 10% by weight or less, preferably 5% by weight or less, and more preferably 1% by weight or less. The terms "acrylic monomer" and "methacrylic monomer" are referred to as "(meth)acrylic monomer."

DETAILED DESCRIPTION OF THE INVENTION

The impact-resistant styrenic resin composition of this invention contains (A) a rubber-containing styrenic resin (hereinafter, it may be referred to as "rubber-modified styrenic resin") which is composed of (A1) a styrenic polymer, and (A2) a rubber polymer which is dispersed in the form of a particle in the styrenic polymer. The rubber-containing styrenic resin (A) may be a block copolymer, but a preferred one is a graft polymer in which the styrenic monomer is grafted to the rubber polymer.

The styrenic polymer (A1) constituting the rubber-modified styrenic resin comprises a homo- or co-polymer of a styrenic monomer, or a copolymer of a styrenic monomer and other copolymerizable monomers.

As the styrenic monomers, there may be mentioned, for example, styrene, alkyl-substituted styrenes (e.g. 2-methylstyrene, 3-methylstyrene, 4-methylstyrene, 4-ethylstyrene, 4-t-butylstyrene, 2,4-dimethylstyrene), α-alkyl-substituted styrenes (e.g. α-methylstyrene, α-methyl-4-methylstyrene), halogenated styrenes (e.g. 2-chlorostyrene, 4-chlorostyrene), etc. These styrenic monomers can be used alone or in combination.

Preferable styrenic monomers include styrene, 4-methylstyrene, and α-methylstyrene, among which styrene is particularly desirable.

The styrenic monomer is generally used alone in a preferred embodiment. But, if necessary, it may be used with other copolymerizable monomers such as (meth)acrylic monomers [e.g. (meth)acrylic acid, (meth)acrylic acid $C_{1-8}$ alkyl esters such as methyl (meth)acrylate, ethyl (meth)acrylate, butyl (meth)acrylate and 2-ethylhexyl (meth)acrylate], (meth)acrylonitrile, maleic acid or its derivative (e.g. maleic anhydride, maleimide, N-substituted maleimides such as N-methylmaleimide and N-phenylmaleimide), etc.

Desirable styrenic polymers (A1) include a homo- or co-polymer of the styrenic monomer, and a styrenic copolymer such as a styrene-methyl methacrylate copolymer. The styrene homopolymer (polystyrene) is most desired.

The rubber polymer (rubber component, A2), which is dispersed in the styrenic polymer (A1) in the form of a particle, includes, for instance, a non-styrenic rubber polymer (e.g. a polybutadiene rubber, a butadiene-isoprene rubber, a butadiene-acrylonitrile copolymer, an ethylene-propylene rubber, an isoprene rubber, an acrylic rubber, an ethylene-vinyl acetate copolymer), and a rubber polymer containing a styrenic monomer unit (e.g. a styrene-butadiene copolymer, a styrene-isoprene copolymer). The rubber polymer can be used singly or in combination.

A preferable rubber polymer (A2) is a rubber polymer containing a butadiene unit, typical example of which are polybutadiene and a styrene-butadiene copolymer.

The polybutadiene may be either a high cis-polybutadiene containing a cis-1,4 structure at a high rate, or a low cis-polybutadiene containing a cis-1,4 structure at a low rate. The copolymers inclusive of a styrene-butadiene copolymer may be copolymerized in any manner, and may be a block copolymer, a random copolymer, or a copolymer having a taper-block structure, to give an example.

The rubber polymer (A2) may be dispersed in the styrenic polymer in various particulate forms, for example, in the form of a single occlusion structure (core/shell structure or capsule structure), a salami structure, or the like.

The amount of the rubber polymer (A2) contained in the rubber-modified styrenic resin (A) is selected in a range not deteriorating the impact resistance and the surface glossiness. To be specific, the amount is about 1 to 20% by weight, preferably about 3 to 15% by weight (e.g. 5 to 15% by weight), and more preferably about 5 to 12% by weight.

As for the particle of the rubber polymer (dispersed rubber particle) dispersed in the styrenic polymer (A1), its average particle size (volume average particle size) is not specifically limited so far as not adversely affecting the impact resistance, the surface glossiness, and other characteristics of the moulded article. For example, the average particle size is about 0.01 to 1.5 $\mu$m, preferably about 0.05 to 1.5 $\mu$m (e.g. 0.1 to 1.5 $\mu$m), and more preferably about 0.1 to 1 $\mu$m, in particular, about 0.1 to 0.8 $\mu$m. The volume average particle size is calculated by the following equation (1). For this calculation, photographs of the resin composition are taken by using a transmission type electron microscope by means of the ultrathin sectioning method, and the particle size is measured in terms of spherical (circular) particle for 1,000 particles of the rubber polymer.

$$\text{Volume average particle size} = (\Sigma niDi^4)/(\Sigma niDi^3) \tag{1}$$

In the equation, $ni$ represents the number of the rubber polymer particles which has a particle size $Di$ ($\mu$m) in terms of spherical particle.

The volume average particle size of the dispersed rubber particle can be adjusted by controlling such factors as the species of the rubber polymer, its molecular weight, the proportion of its components, the species and the amount of a chain transfer agent, the species and the amount of a polymerization initiator, the temperature for polymerization, the stirring speed during polymerization, and the like.

The particle-size distribution of the dispersed rubber polymer particles is not specifically restricted. For instance, the particle-size distribution may show a single peak or plural peaks (e.g. two-peaks, three peaks or more). A preferable particle-size distribution includes, for example, a single-peak distribution and a two-peak distribution.

When the dispersed rubber polymer particles show a two-peak distribution, the average particle size of the small particle component is about 0.01 to 0.5 $\mu$m (preferably about 0.05 to 0.4 $\mu$m, more preferably about 0.1 to 0.4 $\mu$m), and that of the large particle component is about 0.5 to 5 $\mu$m (preferably about 0.6 to 3 $\mu$m, more preferably about 0.8 to 2 $\mu$m). The proportion of the large particle component to the small particle component is not specifically limited. To give an example, the proportion of the large particle is about 0.1 to 50% by weight, preferably about 0.1 to 40 % by weight, and more preferably about 0.1 to 30% by weight based on the total amount of the large particle component and the small particle component (the total amount of the rubber polymer).

The rubber-modified styrenic resin (A) may be prepared (1) by blending or melt-kneading the styrenic polymer and the rubber polymer, but may be usually prepared (2) by polymerizing a mixture of the rubber polymer and the styrenic monomer by means of bulk or mass polymerization, or bulk-suspension polymerization which comprises the step of bulk polymerization followed by the step of suspension polymerization.

The above polymerization may be conducted in the absence of a polymerization initiator by thermal polymerization, or conducted in the presence of a polymerization initiator. Examples of the polymerization initiator are as follows:

organic peroxides [e.g. ketone peroxides such as cyclohexanone peroxide, 3,3,5-trimethylcyclohexanone peroxide and methylcyclohexanone peroxide; peroxyketals such as 1,1-bis(t-butylperoxy)-3,3,5-trimethylcyclohexane, 1,1-bis-(t-butylperoxy)cyclohexane, and n-butyl-4,4-bis(t-butylperoxy) valerate; hydroperoxides such as cumene hydroperoxide, diisopropylbenzene peroxide, and 2,5-dimethylhexane-2,5-dihydroperoxide; dialkyl peroxides such as t-butylcumyl peroxide, $\alpha,\alpha'$-bis(t-butylperoxy-m-isopropyl)benzene, and 2,5-dimethyl-2,5-di(t-butylperoxy)hexyne-3; diacyl peroxides such as decanoyl peroxide, lauroyl peroxide, benzoyl peroxide, and 2,4-dichlorobenzoyl peroxide; peroxy carbonates such as bis(t-butylcyclohexyl)peroxy dicarbonate; peroxy esters such as t-butylperoxy benzoate, and 2,5-dimethyl-2,5-di(benzoylperoxy)hexane];
azo compounds [e.g. 2,2-azobis(2-methylbutylonitrile), 1,1'-azobis(cyclohexane-1-carbonitrile)]; etc. These polymerization initiators can be used alone or in combination of two or more species.

A chain transfer agent may be incorporated for the polymerization reaction (e.g. $\alpha$-methylstyrene dimers, mercaptanes, terpenes, halogen compounds).

Polymerization may be carried out in an inert solvent, which includes aliphatic hydrocarbons such as hexane, heptane and octane; alicyclic hydrocarbons such as cyclohexane, cycloheptane and cyclooctane; aromatic hydrocarbons such as toluene, xylene and ethylbenzene; ketones such as dimethyl ketone, methyl ethyl ketone and methyl isobutyl ketone; and esters such as ethyl acetate. These solvents can be used singly or in combination.

The amount of the above solvent is, for instance, about 0 to 50%, preferably about 0 to 30%, by weight based on the total amount of the rubber-modified styrenic resin (A). It is uneconomical to use the solvent in more than 50% by weight, because the polymerization rate is likely to decline sharply and the energy for the solvent recovery grows higher.

The temperature for polymerization is selected, if the reaction uses no polymerization initiator, from the range of about 90 to 200°C (preferably about 100 to 180°C, more preferably about 120 to 170°C). If the polymerization initiator is employed, the temperature is selected from the range of about 50 to 200°C (preferably about 60 to 180°C, more preferably about 70 to 160°C).

A feature of the present invention is that the impact-resistant styrenic resin composition comprising the rubber-modified styrenic resin (A) shows a modulus of storage elasticity G' of about 500 to 10,000 dyne/cm$^2$ (e.g. 500 to 5,000 dyne/cm$^2$), preferably about 750 to 10,000 dyne/cm$^2$, and more preferably about 1,000 to 10,000 dyne/cm$^2$ (e.g. 1,000 to 5,000 dyne/cm$^2$), the value being measured at 220°C at a frequency of 0.01 Hz in regard to its viscoelasticity. If the modulus of storage elasticity G' deviates from the above range, weld lines are apt to appear on the moulded article.

The viscoelasticity can be measured using a conventional apparatus for viscoelasticity measurement, for example, Rheology, Ltd., "MR500 soliquid meter." The modulus of storage elasticity G' obtained by measurement of viscoelasticity indicates the elasticity of a molten resin. The shearing state of the molten resin, where the resin meets or joins in a metal mould and eventually forms a weld line, presumably corresponds to the value G' at a frequency of 0.01 Hz. As the value G' at 0.01 Hz gets larger, the width of weld line shrinks narrower to give better weld appearances. Although no definite explanations is found for this effect, this is probably because a resin with a larger storage elastic modulus G' is more likely to be pressed onto the metal mould in the stress relaxation stage at a weld part or area, thereby squeezing down the weld area.

The resin composition with the above-specified modulus of storage elasticity G' may comprise only the rubber-modified styrenic resin (A). However, in order to give an increased storage elastic modulus G' under the conditions of a temperature of 220°C and a frequency of 0.01 Hz, it is effective to combine the resin (A) with the rubber elastomer (rubber or elastomer) (B) to give the resin composition. This combination serves to dramatically improve both the impact resistance and the surface glossiness of the moulded article. In the rubber-containing styrenic resin, as has been described, impact resistance and surface glossiness conflict with each other in the rubber-containing styrenic resin, depending on the amount and the average particle size of the rubber polymer. Thus, it is impossible to hold both of the impact resistance and the surface glossiness of the moulded article at high levels. In contrast, incorporation of the rubber elastomer (B) into the rubber-modified styrenic resin (A) helps to provide a moulded article which enjoys remarkable improvements in both of the impact resistance and the surface glossiness, which would otherwise conflict with each other. Such incorporation also ensures a stronger preventive effect against weld line formation on the moulded article.

The rubber elastomer (B) includes butadiene-series rubber elastomers, and non-butadiene-series rubber elastomers which are substantially free from a butadiene component.

As the butadiene-series rubber elastomers, there may be mentioned, for example, a non-styrenic rubber elastomer such as a polybutadiene rubber, a butadiene-isoprene rubber and a butadiene-acrylonitrile copolymer; and a styrenic rubber elastomer such as a styrene-butadiene copolymer.

As the non-butadiene-series rubber elastomers, there may be mentioned, for example, non-styrenic rubber elastomers including an isoprene rubber, an olefinic rubber (e.g. ethylene-propylene rubber), an acrylic rubber, an ethylene-vinyl acetate copolymer, a copolymer of an olefin and a (meth)acrylic monomer, and a copolymer of an olefin, carbon monoxide and a (meth)acrylic monomer; and styrenic rubber elastomers including a styrene-isoprene copolymer, a styrene-isobutylene copolymer, and a hydrogenated styrene-butadiene copolymer.

The above olefin, which includes ethylene and propylene, at least contains ethylene, in general. A desirable olefin is ethylene.

The (meth)acrylic monomer includes, for example, (meth)acrylic acid and (meth)acrylic acid esters [e.g. methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, hexyl (meth)acrylate, 2-ethylhexyl (meth)acrylate, octyl (meth)acrylate, decyl (meth)acrylate, tetradecyl (meth)acrylate, and other (meth)acrylic acid-straight chain or -branched chain $C_{1-20}$ alkyl esters; 2-hydroxyethyl (meth)acrylate, 2-hydroxypropyl (meth)acrylate and other hydroxyl group-containing (meth)acrylates; glycidyl (meth)acrylate; etc.]. The (meth)acrylic monomer can be used independently or in combination.

In the (meth)acrylic acid alkyl ester, a desirable alkyl group includes a straight-chain or branched-chain $C_{1-12}$ alkyl group, and more desirably a $C_{1-10}$ alkyl group (particularly, a $C_{2-8}$ alkyl group). Generally, an acrylic acid $C_{1-10}$ alkyl

ester, particularly an acrylic acid $C_{1-8}$ alkyl ester (e.g. acrylic acid $C_{2-6}$ alkyl ester), is used as the (meth)acrylic acid alkyl ester.

If necessary, the above monomers may be employed with a yet another vinyl-series monomer (e.g. vinyl esters such as vinyl acetate), an unsaturated mono-carboxylic acid [e.g. (meth)acrylic acid, crotonic acid], or an unsaturated polycarboxylic acid (e.g. di-carboxylic acids such as itaconic acid, maleic acid and fumaric acid; its alkyl ester or acid anhydride).

The species of the rubber elastomer (B) is not restricted as far as being capable of preventing the formation of weld lines. It is favourable to be a non-butadiene-series rubber elastomer which is substantially free from a butadiene component.

Preferable examples of the non-butadiene-series rubber elastomers are:

(1) a copolymer of an olefin, carbon monoxide, and an acrylic monomer (e.g. a copolymer of ethylene, carbon monoxide and a (meth)acrylic acid $C_{1-6}$ alkyl ester, particularly a copolymer of ethylene, carbon monoxide and an acrylic acid $C_{2-6}$ alkyl ester, such as an ethylene-butyl acrylate-carbon monoxide copolymer);
(2) a copolymer of an olefin and a (meth)acrylic monomer (e.g. a copolymer of ethylene and a (meth)acrylic acid $C_{1-6}$ alkyl ester, in particular, a copolymer of ethylene and an acrylic acid $C_{1-6}$ alkyl ester, such as an ethylene-methyl methacrylate copolymer, an ethylene-methyl acrylate copolymer, and an ethylene-ethyl acrylate copolymer);
(3) a hydrogenated styrene-butadiene copolymer; and
(4) a styrene-isobutylene copolymer, and a styrene-isoprene copolymer.

The copolymer (1) of an olefin, carbon monoxide, and (meth)acrylic monomer (particularly, a copolymer of ethylene, carbon monoxide, and an acrylic acid $C_{2-6}$ alkyl ester) contains the components in the following proportions.

olefin (e.g. ethylene):

about 30 to 90% by weight
preferably about 40 to 80% by weight
particularly about 40 to 70% by weight

carbon monoxide:

about 1 to 40% by weight
preferably about 3 to 30% by weight
particularly about 5 to 20% by weight

(meth)acrylic monomer:

about 5 to 60% by weight
preferably about 10 to 55% by weight
more preferably about 15 to 50% by weight
particularly about 20 to 50% by weight

The ethylene content of the copolymer (2) is about 20 to 90% by weight (preferably about 30 to 80% by weight, particularly about 30 to 70% by weight).

In the copolymer (3), which may be either a random or block copolymer, the styrene content is about 5 to 40% by weight, preferably about 10 to 35% by weight (e.g. 10 to 25% by weight), and more preferably about 10 to 20% by weight. The hydrogenation rate of the butadiene component is generally about 80 to 100%, preferably about 90 to 100% (particularly, about 95 to 100%).

The copolymer (1) can be obtained by a polymerization reaction which comprises supplying the constitutive monomers (namely, an olefin, carbon monoxide and a (meth)acrylic monomer) and a catalyst (e.g. an organic peroxide, an azo compound) into a high-speed stirring reaction vessel in predetermined proportions, and mixing and stirring the mixture at a high speed, at a high temperature (about 120 to 250°C, for example, 160 to 230°C), under a high pressure (about 20,000 to 300,000 psi, for example, 24,000 to 27,000 psi).

The melt flow rate (MFR) of the rubber elastomer (B) is, for instance, about 1 to 1,000 g/10 mins., preferably about 5 to 200 g/10 mins. (e.g. 5 to 100 g/10 mins.), and more preferably about 5 to 50 g/10 mins. (e.g. 5 to 25 g/10 mins.), at a temperature of 190°C under a load of 2.16 kg.

The ratio of the rubber elastomer (B) is selected from a range where the formation of weld lines can be prevented, and is about 0.1 to 10 parts by weight (e.g. 1 to 10 parts by weight), preferably about 2 to 8 parts by weight, and more preferably about 3 to 7 parts by weight (e.g. 3 to 5 parts by weight) relative to 100 parts by weight of the rubber-containing styrenic resin. If the ratio of the rubber elastomer (B) is below 0.1 part by weight, the impact resistance cannot be improved as expected, and if the ratio exceeds 10 parts by weight, the resultant moulded article loses its rigidity as well as the impact resistance, with its appearance being deteriorated by phase separation.

The resin composition of the present invention can be prepared by a method which comprises mixing the styrenic polymer (A-1), the rubber polymer (A-2) and the rubber elastomer (B), or a method which comprises mixing the rubber-modified styrenic resin (A) and the rubber elastomer (B). In general, the latter method is applied for the preparation of the resin composition. The above components are blended in a conventional manner, for instance, by using an extruder, a banbury mixer, etc. Although the solution mixing method is applicable, the melt-mixing (melt-kneading) method is usually adopted for the preparation of the resin composition. The resin composition can be also prepared by dissolving the rubber elastomer (B) in the styrenic monomer for polymerization (bulk polymerization, bulk-suspension polymerization, etc.), in the preparation step of the rubber-modified styrenic resin (A). The shape of the resin composition of the present invention is not strictly limited, and may be in the form of a particle or granule, a pellet, a flake or the like.

The Vicat softening temperature of the impact-resistant styrenic resin composition is not specifically limited, and is about 80 to 110°C, preferably about 85 to 105°C, and more preferably about 90 to 105°C. The heat-resistance property of the moulded article is deteriorated with too low a Vicat softening temperature, whereas a simple moulding cannot be expected with too high a Vicat softening temperature. The Vicat softening temperature of the resin or the resin composition may be regulated by adding a plasticiser, or by copolymerizing a monomer which corresponds to a polymer with a different degree of the Vicat softening temperature.

As the plasticisers, there may be exemplified a mineral oil, an aliphatic dicarboxylic acid ester (e.g. dioctyl adipate), a phthalic acid ester (e.g. dioctyl phthalate), etc.

As the copolymerizable monomer components for controlling the Vicat softening temperature, there may be mentioned an acrylic acid $C_{2-6}$ alkyl ester (e.g. butyl acrylate), maleic anhydride, maleimide or its derivative (e.g. N-methylmaleimide, N-phenylmaleimide), etc.

Use of the impact-resistant styrenic resin composition of this invention significantly prevents the formation of weld lines. When an article which possesses plural gates or a hollow part (space) therein is produced by injection-moulding of the impact-resistant styrenic resin composition at a metal mould temperature of 60°C, the width of a formed weld line is 15 μm or less (e.g. 0 to 12 μm), preferably 10 μm or less (e.g. about 0 to 10 μm), more preferably 8 μm or less (e.g. about 0 to 5 μm), and particularly 7 μm or less (e.g. about 0 to 2 μm). The weld line tends to stand out on the moulded article if its width exceeds 15 μm. The width is measured for a weld line which is formed by the injection-moulding of the resin composition using a proper metal mould or die at a metal mould temperature of 60°C. A simple measuring process is to shape a 5 x 9 cm three-stage colour plate (first stage: 3 mm (thickness) x 4 cm (length); second stage: 2 mm x 2.5 cm; third stage: 1 mm x 2.5 cm) which possesses two gates on the 3-mm-thick stage, and measure the width of a weld line at a position 1 cm inside from the end of the formed weld line.

The width of the weld line is measured by means of a conventional device including a surface roughness tester and a microscope. LASER MICROSCOPE 1LM21 (Lasertec, Inc.) may be utilised as the microscope.

The resin composition of the present invention may contain various additives, where necessary. Examples of the additives are slipping agents (e.g. a metal salt of a higher fatty acid such as zinc stearate and calcium stearate; a higher fatty acid amide; a bisamide such as ethylenebisstearylamide), plasticisers (e.g. a mineral oil), antioxidants (e.g. a phenolic antioxidant, a phosphoric antioxidant), ultraviolet ray absorbers, flame-retarders, antistatic agents, fillers, colouring agents, mould lubricants or parting agents (e.g. dimethylpolysiloxane (silicon oil)), etc.

The moulded article of the present invention is formed of the impact-resistant styrenic resin composition, which can be moulded by a conventional moulding technology (e.g. extrusion-moulding, injection-moulding, blow-moulding, foaming), generally by extrusion-moulding, injection-moulding or foaming. This impact-resistant styrenic resin composition imparts not only a high impact resistance and good surface glossiness to the moulded article, but also a drastic prevention of weld line formation. A moulding method which takes advantage of the resin composition of the present invention includes the injection moulding method (particularly with the use of plural gates), in which a weld line is more likely to appear. In the moulding process using a multi-gate metal mould which has plural gates, the present invention serves to prevent the formation of streaky marks (weld lines) formed by the confluence of plural molten resins, which eventually avoids the possible drop in the impact resistance caused by the weld lines. With a high surface glossiness and a reduced formation of weld lines, the moulded article thus prepared exhibits a high surface accuracy or precision. In addition, the moulded article may be constituted with a thinner wall owing to its high impact resistance.

The shape of the moulded article is not limited, and may have a two-dimensional structure such as a sheet (plate), or a three-dimensional structure. The moulded article is useful for a wide range of applications which requires improved external appearances as well as the impact resistance. The field of its application includes, for instance, members (housing and other armouring members) for electrical equipment, office or business machines, telephones and other communication devices, and office automation (OA) apparatus; and packing materials including packaging containers.

In the present invention, use of a resin composition which possesses a specific modulus of storage elasticity G' drastically prevents the formation of weld lines. Its use also contributes to hold excellent external appearances (surface glossiness, surface smoothness, etc.) as well as a high impact resistance without confliction. Besides, moulding of the resin composition can be operated efficiently without changing the moulding conditions or affecting the resin characteristics. All these factors results in the production of a moulded article which is provided with a high impact resistance and excellent external appearance properties (surface glossiness, etc.) and in which the formation of weld lines is suppressed. In addition, it becomes easier to mould a thinner-walled article.

The following examples are intended to describe the present invention in further detail and should by no means be interpreted as defining the scope of the invention.

EXAMPLES

The performances of the rubber-modified styrenic resins obtained in Examples and Comparative Examples were measured and evaluated by the following processes.

[Preparation of a moulded piece for physical property evaluation]

A test piece was prepared by injection-moulding with the use of a moulding machine (Nissei Resin Industries, Ltd., IS-40E) at a cylinder temperature of 220°C and a metal mould temperature of 45°C.

[Dupont Impact Strength]

Based on JIS K7211, the 50% breaking or destruction energy was measured for a test piece with a thickness of 2 mm.

[Izod Impact Strength]

Based on JIS K7110, the impact strength was measured for a test piece (notched specimen: width 12.7 mm, thickness 6.4 mm).

[Glossiness]

The glossiness was measured according to JIS Z8742.

[Vicat Softening Temperature]

The softening point was measured according to JIS K7206.

[Weld Appearances]

A 5-cm-wide three-stage colour plate (first stage: 3 mm (thickness) x 4 cm (length); second stage: 2 mm x 2.5 cm; third stage: 1 mm x 2.5 cm) possessing two gates was injection-moulded with the use of a moulding machine (Nissei Resin Industries, Ltd., IS-40E) at a cylinder temperature of 220°C and a metal mould temperature of 60°C to give a test piece. The weld line appeared on the external surface was visually evaluated according to the following standards.

◎:    No weld lines
○:    Hardly recognisable weld lines
△:    Fairly apparent weld lines
X:    Marked weld lines

[Measurement of the Weld Line Width]

With the use of a measuring apparatus (Lasertec, Inc., LASER MICROSCOPE 1LM21), the width and the depth was measured at a point 1 cm inside of the end of a weld line formed on the 3-mm-thick stage of the above-obtained three-stage colour plate. Reflected lights were scanned in the direction of the depth of the weld line, and the area which showed the maximum reflection intensity was regarded as the surface of the moulded article. The accumulated or integrated value of the maximum reflection was smoothed by window (25), clamp (10%), pixel (0), and slice (30%) so as to measure the width and the height of the weld line.

[Measurement of Modulus of Storage Elasticity G']

For the measurement, use was made of MR 500 soliquid meter (Rheology, Ltd.), whose gap was adjusted to 0.055 mm with the use of a cone plate with a cone angle of 1.732 degrees and a cone diameter of 1.998 cm. The modulus of storage elasticity was measured at a temperature of 220°C, a distortion of 0.1 degree and a frequency of 0.01 to 20 Hz, using a sample piece (1.5 cm x 1.5 cm) cut out from an injection-moulded 1-mm-thick test piece. The modulus of storage elasticity G' was read at a frequency of 0.01 Hz on the resultant frequency-storage elastic modulus curve.

Reference Example 1

[Production of a rubber-modified styrenic resin (a1)]

Dissolved in 90 parts by weight of a styrene monomer were 10 parts by weight of a styrene-butadiene copolymer rubber (Nippon Zeon Co., Ltd., Trade name: NS-312), and 0.03 part by weight of 1,1-bis(t-butylperoxy)-3,3,5-trimethylcyclohexane (NOF Corporation, Trade name: PERHEXA 3M). The mixed solution was fed into a reactor equipped with paddle blades (capacity: 10 litre). In the first polymerization stage, polymerization was effected at 120°C with rotating the stirring blades at 50 rpm, whereby a rubber polymer was phase-inverted to form a rubber particle. At a conversion of 40%, the reaction was allowed to enter the second polymerization stage, where polymerization was continued at 140°C with rotating the stirring blades at 10 rpm. The polymerization mixture was drawn out at a conversion of 85%, and supplied into an extruder to remove residual volatile matters under vacuum at a high temperature. The resultant mixture was pelletised to give a rubber-modified styrenic resin (a1). The average particle size of the dispersed rubber particle was calculated by the above equation (1). For the calculation, transmission-type electron microscopic photographs of the rubber-modified styrenic resin were taken by means of the ultrathin sectioning method to measure the particle size (Di), in terms of spherical particle, of 1,000 rubber polymer particles.

Reference Examples 2-5

[Production of rubber-modified styrenic resins (a2)-(a5)]

Rubber-modified styrenic resins were produced in the same manner as in Reference Example 1, except that some of the production conditions were changed as specified below.

Reference Ex. 2: Rubber-modified styrenic resin (a2)

Species of the rubber polymer:

Nippon Zeon Co. Ltd., Trade name: BR1220SG Reference Ex. 3: Rubber-modified styrenic resin (a3)

Species of the rubber polymer:

Ube Industries, Ltd. Trade name: UBEPOL-Z022

Stirring speed

(the first polymerization stage): 40 rpm

Reference Ex. 4: Rubber-modified styrenic resin (a4)

Amount of the rubber polymer: 15 parts by weight

Reference Ex. 5: Rubber-modified styrenic resin (a5)

Amount of the rubber polymer: 3 parts by weight
The production conditions of Reference Examples 1 to 5 are given in Table 1.

Table 1

| | REFERENCE EXAMPLES | | | | |
|---|---|---|---|---|---|
| | 1 | 2 | 3 | 4 | 5 |
| Rubber | NS-312* | BR1220SG* | UBEPOL-Z022** | NS-312* | NS-312* |
| Rubber charge (parts by weight) | 10 | 10 | 10 | 15 | 3 |
| Reaction temperature in first stage (°C) | 120 | 120 | 120 | 120 | 120 |
| Stirring speed in first stage (rpm) | 50 | 50 | 40 | 50 | 50 |
| Reaction temperature in second stage (°C) | 140 | 140 | 140 | 140 | 140 |
| Stirring speed in second stage (rpm) | 10 | 10 | 10 | 10 | 10 |
| Rubber content (weight %) in the composition | 11.6 | 11.6 | 11.6 | 17.2 | 3.5 |
| Average rubber particle size ($\mu$m) | 0.2 | 0.7 | 1.4 | 0.2 | 0.2 |

\* Product of Nippon Zeon Co., Ltd.
\*\* Product of Ube Industries, Ltd.

Example 1

Extruded pellets were obtained by mixing 95 parts by weight of the rubber-modified styrenic resin (a1: Reference Example 1), and 5 parts by weight of the rubber elastomer (b1) [a copolymer of ethylene (56% by weight), carbon monoxide (12% by weight), and n-butyl acrylate (32% by weight); Melt flow rate: 12 g/10 mins. (190°C, 2.16 kg)], and by extruding the mixture at 220°C with the use of a biaxial extruder (Ikegai Seisakusho, Ltd.). A test piece, produced by injection-moulding of the pellets, was measured with regard to its physical properties.

Example 2

The physical properties of a test piece were measured in the same manner as in Example 1, except that 95 parts by weight of the rubber-modified styrenic resin (a2: Reference Example 2) was employed instead of 95 parts by weight of the rubber-modified styrenic resin (a1) used in Example 1.

Example 3

The procedure of Example 1 was repeated except for using 95 parts by weight of the rubber-modified styrenic resin (a3: Reference Example 3) instead of 95 parts by weight of the rubber-modified styrenic resin (a1) used in Example 1.

Example 4

The procedure of Example 1 was repeated except for using 95 parts by weight of the rubber-modified styrenic resin (a4: Reference Example 4) instead of 95 parts by weight of the rubber-modified styrenic resin (a1) used in Example 1.

Example 5

The procedure of Example 1 was repeated except for using 95 parts by weight of the rubber-modified styrenic resin (a5: Reference Example 5) instead of 95 parts by weight ofthe rubber-modified styrenic resin (a1) used in Example 1.

Example 6

The physical properties of a test piece were measured as in Example 1, except for employing 85 parts by weight of the rubber-modified styrenic resin (a1: Reference Example 1) and 10 parts by weight of the rubber-modified styrenic resin (a3: Reference Example 3), instead of 95 parts by weight of the rubber-modified styrenic resin (a1) used in Example 1.

Example 7

The physical properties of a test piece were measured as in Example 1, except for adding 5 parts by weight of an ethylene-methyl methacrylate (MMA) co-polymer (Sumitomo Chemical Company, Ltd., Trade name: ACRYFT WM403) to 95 parts by weight of the rubber-modified styrenic resin (a1) of Example 1.

The results of Examples 1 to 7 are shown in Table 2.

Table 2

| | | EXAMPLES | | | | | | |
|---|---|---|---|---|---|---|---|---|
| | | 1 | 2 | 3 | 4 | 5 | 6 | 7 |
| Rubber-modified styrenic resin (parts by weight) | (a1) | 95 | | | | | 85 | 95 |
| | (a2) | | 95 | | | | | |
| | (a3) | | | 95 | | | 10 | |
| | (a4) | | | | 95 | | | |
| | (a5) | | | | | 95 | | |
| Et-CO-BA copolymer (b1) (parts by weight) | | 5 | 5 | 5 | 5 | 5 | 5 | |
| Ethylene-MMA copolymer (parts by weight) | | | | | | | | 5 |
| Rubber content (% by weight) | | 11.0 | 11.0 | 11.0 | 16.3 | 3.3 | 11.0 | 11.0 |
| Average rubber particle size ($\mu$m) | | 0.2 | 0.7 | 1.4 | 0.2 | 0.2 | 0.3 | 0.2 |
| Dupont Impact Strength (kg-cm/cm) | | 52 | 50< | 50< | 50< | 46 | 50< | 50< |
| Izod Impact Strength (kg-cm/cm$^2$) | | 5.5 | 9.5 | 8.6 | 6.2 | 4.1 | 11.3 | 5.6 |
| Glossiness (%) | | 95.6 | 94.3 | 84.0 | 94.2 | 97.1 | 95.0 | 94.3 |
| Vicat softening point (°C) | | 100.7 | 101.1 | 100.8 | 98.8 | 101.2 | 100.7 | 100.6 |
| Weld appearance | | ◎ | ○ | ○ | ○ | ◎ | ◎ | ○ |
| Weld line width ($\mu$m) | | 4.7 | 7.4 | 8.3 | 4.2 | 9.1 | 5.3 | 14.3 |
| Modulus of storage elasticity G' | | 2000 | 1780 | 1750 | 2040 | 1760 | 1900 | 1060 |

Comparative Examples 1-5

Without adding the rubber elastomer (b1: a copolymer of ethylene, carbon monoxide and n-butyl acrylate) to the rubber-modified styrenic resins (a1) to (a5) of Reference Examples 1 to 5, the physical properties of test pieces were measured in the same manner as in Examples 1 to 5.

Comparative Example 6

The physical properties of a test piece were measured in the same manner as in Example 6, without adding the rubber elastomer (b1: a copolymer of ethylene, carbon monoxide and n-butyl acrylate) to a resin composition comprising 90 parts by weight of the rubber-modified styrenic resin (a1: Reference Example 1) and 10 parts by weight of the rubber-modified styrenic resin (a3: Reference Example 3).

Comparative Example 7

The physical properties of a test piece were measured as in Example 1, except for adding 5 parts by weight of a low-density polyethylene (LDPE) to 95 parts by weight of the rubber-modified styrenic resin (a1: Reference Example 1).

The results of Comparative Examples 1 to 7 are compiled in Table 3.

Table 3

| | | COMPARATIVE EXAMPLES | | | | | | |
|---|---|---|---|---|---|---|---|---|
| | | 1 | 2 | 3 | 4 | 5 | 6 | 7 |
| Rubber-modified styrenic resin (parts by weight, pbw) | (a1) | 100 | | | | | 90 | 95 |
| | (a2) | | 100 | | | | | |
| | (a3) | | | 100 | | | 10 | |
| | (a4) | | | | 100 | | | |
| | (a5) | | | | | 100 | | |
| Low-density polyethylene (LDPE)(pbw) | | | | | | | | 5 |
| Rubber content (% by weight) | | 11.6 | 11.6 | 11.6 | 16.3 | 3.3 | 11.6 | 11.0 |
| Average rubber particle size ($\mu$m) | | 0.2 | 0.7 | 1.4 | 0.2 | 0.2 | 0.3 | 0.2 |
| Dupont Impact Strength (kg-cm/cm) | | 2.3 | 50.2 | 33.6 | 4.3 | 1.8 | 50< | 1.2 |
| Izod Impact Strength (kg-cm/cm$^2$) | | 5.8 | 9.1 | 8.5 | 6.3 | 3.8 | 10.8 | 3.2 |
| Glossiness (%) | | 88.4 | 84.0 | 59.1 | 85.2 | 89.9 | 87.6 | 68.2 |
| Vicat softening point (°C) | | 101.0 | 102.0 | 101.3 | 99.6 | 101.4 | 101.2 | 101.4 |
| Weld appearance | | △ | X | X | X | △ | △ | X |
| Weld line width ($\mu$m) | | 21 | 28 | 29 | 20 | 23 | 21 | 16.9 |
| Modulus of storage elasticity G' | | 300 | 120 | 120 | 350 | 140 | 270 | 480 |

As evident from the comparison between Table 2 and Table 3, the moulded articles of Examples 1 to 7 exhibit, unlike those of Comparative Examples 1 to 7, remarkably improved impact-resistance and surface glossiness, irrespective of the content of the rubber polymer or the average particle size of the rubber polymer particle. In addition, the formation of weld lines is apparently inhibited.

Example 8

The physical properties of a test piece were measured in the same manner as in Example 1, by using 95 parts by weight of the rubber-modified styrenic resin (a1: Reference Example 1), and 5 parts by weight of a hydrogenated styrene-butadiene copolymer (b2: Japan Synthetic Rubber Co., Ltd., DYNARON 4600P; a hydrogenated copolymer of styrene, low cis-diene and high cis-diene; styrene content: 20% by weight, hydrogenation rate: about 100%).

Example 9

The physical properties of a test piece were measured in the same manner as in Example 1, except for using 5 parts by weight of a copolymer (b3) of ethylene, an acrylic acid ester and an acid anhydride (Japan Synthetic Rubber Co., Ltd., ET184M; an ethylene-acrylate-acid anhydride copolymer; maleic anhydride content: 2-3% by weight), instead of the rubber elastomer (b1) used in Example 7.

Example 10

The physical properties of a test piece were measured in the same manner as in Example 1, except for using 5 parts by weight of a hydrogenated styrene-butadiene copolymer (b4: Japan Synthetic Rubber Co., Ltd., TS3000S; a random copolymer comprising isobutylene and a small amount of isoprene and having its terminal blocked with a (poly)styrene; styrene content: 30% by weight), instead of the rubber elastomer (b1) used in Example 7.

Example 11

The physical properties of a test piece were measured in the same manner as in Example 1, except for using 5 parts by weight of an ethylene-ethyl acrylate copolymer (Japan Polyolefin Industries, Ltd., A4250; ethylene content: 25% by weight), instead of the rubber elastomer (b1) used in Example 7,

Comparative Example 8

The physical properties of a test piece were measured as in Example 1, except that 10 parts by weight of polybutene was incorporated into 90 parts by weight of the rubber-modified styrenic resin (a1: Reference Example 1).

Comparative Example 9

Extruded pellets were produced by blending 95 parts by weight of the rubber-modified styrenic resin (a1: Reference Example 1) with 5 parts by weight of a styrenic thermoplastic elastomer (Kuraray Co., Ltd., Cepton 4033; a hydrogenated styrene-isoprene-styrene copolymer; styrene content: 30% by weight), and by extruding the mixture using a biaxial (twin-screw) extruder (Ikegai Seisakusho, Ltd.) at 220°C. The pellets were injection-moulded into a test piece, whose physical properties were measured.

The physical properties of the test pieces are shown in Table 4.

Table 4

|  | EXAMPLES | | | | COMPARATIVE EXAMPLES | |
|---|---|---|---|---|---|---|
|  | 8 | 9 | 10 | 11 | 8 | 9 |
| Dupont Impact Strength (kg-cm/cm) | >50 | 8.1 | 1.4 | >50 | 2.2 | 48.3 |
| Vicat softening point (°C) | 97.7 | 96.8 | 97.2 | 97.2 | 95.3 | 97.8 |
| Weld line width ($\mu$m) | 5.7 | 7.4 | 8.3 | 11.8 | 18.2 | 17.6 |
| Storage elastic modulus G' | 550 | 910 | 720 | 3000 | 320 | 480 |
| Weld appearance | ○ | ○ | ○ | ○ | X | X |

**Claims**

1. An impact-resistant styrenic resin composition, which comprises a rubber-containing styrenic resin comprising a styrenic polymer and a rubber polymer dispersed in said styrenic polymer in particulate form, and which has a modulus of storage elasticity G' of 500 to 10,000 dyne/cm$^2$ measured at a temperature of 220°C at a frequency of 0.01 Hz in terms of its viscoelasticity.

2. An impact-resistant styrenic resin composition as claimed in claim 1, wherein a moulded article of said resin composition, moulded at a metal mould temperature of 60°C, has a weld line of not wider than 15 $\mu$m.

3. An impact-resistant styrenic resin composition as claimed in claim 1, wherein a moulded article of said resin composition, moulded at a metal mould temperature of 60°C, has a weld line of not wider than 10 $\mu$m.

4. An impact-resistant styrenic resin composition as claimed in claim 1, wherein the Vicat softening temperature of said resin composition is 80 to 110°C.

5. An impact-resistant styrenic resin composition as claimed in claim 1, wherein the content of the rubber polymer is 1 to 20% by weight in the rubber-containing styrenic resin, and the dispersed rubber polymer particle has an average particle size of 0.01 to 1.5 $\mu$m.

6. An impact-resistant styrenic resin composition as claimed in claim 1, wherein the rubber polymer in the rubber-containing styrenic resin shows a two-peak particle-size distribution comprising a small particle component with an average particle size of 0.01 to 0.5 $\mu$m and a large particle component with an average particle size of 0.8 to 2.0 $\mu$m.

7. An impact-resistant styrenic resin composition as claimed in claim 1, wherein said resin composition comprises the rubber-containing styrenic resin and a rubber elastomer which is substantially free from a butadiene component.

8. An impact-resistant styrenic resin composition as claimed in claim 7, wherein the rubber elastomer is at least one member selected from the group consisting of a hydrogenated styrene-butadiene copolymer, a co-polymer of an olefin and a (meth)acrylic monomer, and a copolymer of an olefin, carbon monoxide and a (meth)acrylic monomer.

9. An impact-resistant styrenic resin composition as claimed in claim 7, wherein the proportion of the rubber elastomer is 0.1 to 10 parts by weight relative to 100 parts by weight of the rubber-containing styrenic resin.

10. An impact-resistant styrenic resin composition as claimed in claim 1 which comprises the rubber-containing styrenic resin and a rubber elastomer which is substantially free from a butadiene component, wherein:

the content of the rubber polymer is 3 to 15% by weight in said rubber-containing styrenic resin and the dispersed rubber polymer particle has an average particle size of 0.05 to 1.5 $\mu$m;
the proportion of said rubber elastomer is 1 to 10 parts by weight relative to 100 parts by weight of the rubber-containing styrenic resin; and
said resin composition has a modulus of storage elasticity G' of 500 to 5,000 dyne/cm$^2$ measured at a temperature of 220°C at a frequency of 0.01 Hz in terms of its viscoelasticity, and gives a weld line of not wider than 10 $\mu$m when moulded at a metal mould temperature of 60°C.

11. An impact-resistant styrenic resin composition as claimed in claim 10, wherein said rubber elastomer is at least one member selected from the group consisting of a hydrogenated styrene-butadiene copolymer, a copolymer of an olefin and a (meth)acrylic acid $C_{1-6}$ alkyl ester, and a copolymer of an olefin, carbon monoxide and a (meth)acrylic acid $C_{1-6}$ alkyl ester.

12. A method of producing the impact-resistant styrenic resin composition of claim 1, which comprises blending the rubber-containing styrenic resin comprising a styrenic polymer and a rubber polymer dispersed in said styrenic polymer in particulate form, with a rubber elastomer.

13. A moulded article of an impact-resistant styrenic resin composition which comprises a rubber-containing styrenic resin and has a modulus of storage elasticity G' of 500 to 10,000 dyne/cm$^2$ measured at 220°C at a frequency of 0.01 Hz in terms of its viscoelasticity, wherein said moulded article, moulded at a metal mould temperature of 60°C, has a weld line of not wider than 15 $\mu$m.

14. A moulding method for moulding an impact-resistant styrenic resin composition comprising a rubber-containing styrenic resin and having a modulus of storage elasticity G' of 500 to 10,000 dyne/cm$^2$ measured at 220°C at a frequency of 0.01 Hz in terms of its viscoelasticity to provide a moulded article having a weld line of not wider than 15 $\mu$m when said article is moulded at a metal mould temperature of 60°C.